Europäisches Patentamt

European Patent Office

Office européen des brevets

(11) Publication number: **0 418 913 A2**

# EUROPEAN PATENT APPLICATION

(21) Application number: 90118182.6

(22) Date of filing: 21.09.90

(51) Int. Cl.⁵: **C08L 63/10, C08L 67/06, C08F 293/00**

(30) Priority: 22.09.89 JP 245201/89
30.06.90 JP 201704/90

(43) Date of publication of application:
**27.03.91 Bulletin 91/13**

(84) Designated Contracting States:
**DE FR GB IT**

(71) Applicant: **DAINIPPON INK AND CHEMICALS, INC.**
**35-58, Sakashita 3-chome**
**Itabashi-ku Tokyo(JP)**

(72) Inventor: **Shiraishi, Hidehiko**
**4-17-103, Johnan-cho**
**Izumiohtsu-shi, Osaka(JP)**
Inventor: **Mitani, Tomomasa**
**70-9, Midorigaoka**
**Izumi-shi, Osaka(JP)**
Inventor: **Fujita, Yukiko**
**324-96, Kena-cho**
**Sakai-shi, Osaka(JP)**

(74) Representative: **Brauns, Hans-Adolf, Dr. rer. nat. et al**
**Hoffmann, Eitle & Partner, Patentanwälte**
**Arabellastrasse 4**
**W-8000 München 81(DE)**

(54) Radical polymerizable unsaturated resin compound and method of manufacture of a block copolymer used therein.

(57) The invention relates to a radical polymerizable unsaturated resin compound applied to a molded material which can provide a molded product with superior surface smoothness without shrinkage at the time of curing by means of a block copolymer, and a method of manufacture of a block copolymer which is used as a block copolymer curing low-profile additive for this. The radical polymerizable unsaturated resin compound of the invention can be used to advantage in SMC and BMC using unsaturated polyester resin and can provide a molded product with superior surface smoothness, paintability, physical strength, and pigmentability.

# RADICAL POLYMERIZABLE UNSATURATED RESIN COMPOUND AND METHOD OF MANUFACTURE OF A BLOCK COPOLYMER USED THEREIN

## Background of the Invention

(Field of the Invention)

The present invention relates to a radical polymerizable unsaturated resin compound applied to a molded material which can provide a molded product with superior surface smoothness without shrinkage at the time of curing by means of a block copolymer, and a method of manufacture of a block copolymer which is used as a low-profile additive for this. Furthermore, the present invention provides a manufacturing method for block copolymers having block compound elements using condensation polymers or vinyl polymers of unsaturated polyester, polyether, polycarbonate, polyurethane or the like as the above-mentioned low-profile additive, and can also be used jointly with polystyrene- and styrene-conjugate diene block copolymers.

(Background Art)

Radical polymerizable resin compounds such as unsaturated polyester resins and the like are used for many purposes, as they have low viscosity and are inexpensive; however, when styrene, which is a usual component of such compounds, is polymerized, volume shrinkage inevitably results, and this causes deformities, warping, and cracking in the molded products. In order to reduce the effects of this drawback, these compounds are divided into the following types based on their relationship to sheet molded compounds (shortened to SMC) and bulk molded compounds (shortened to BMC) using unsaturated polyester resins: (1) types which are compatible, such as poly(vinyl acetate) and saturated polyester, (2) types which dissolve in a monomer within an unsaturated polyester resin compound, but are not compatible with the polymer and disperse in droplet form, such as polystyrene, poly(methyl methacrylate), and styrene-butadiene block copolymer, and (3) types which disperse in solid form, such as polyethylene powder.

## Summary of the Invention

However, resins which can be molded by the application of heat have good points and shortcomings. In other words, the poly(vinyl acetate) of (1), for example, controls shrinkage at the time of radical curing, that is, the low-shrinkage effect is large, and a smooth surface can be obtained, but its physical strength, pigmentability, and boiling water resistance are poor. Furthermore, the polystyrene of (2) is excellent in terms of physical strength, pigmentability, and resistance to boiling water, but its low-shrinkage effect is inferior. All that can be obtained in the case of poly(methyl methacrylate) is results somewhere between those of polystyrene and poly(vinyl acetate). In addition, styrene-butadiene block copolymer is extremely superior in terms of low-shrinkage effect, and a smooth surface can be obtained, but since its compatibility with unsaturated polyester is poor, phase separation occurs in mixtures with SMC manufacturing resin, and a homogeneous molded product cannot be obtained. Furthermore, in the case of polyethylene of (3), the pigmentability is good, but the low-shrinkage compensation is small, and its paintability is poor.

In this way, since there are good points and shortcomings in the low-profile additives which compensate for shrinkage at the time of radical polymerization, they are divided and used in accordance with the effects required and the purpose of use.

In view of these circumstances, and as a result of the earnest research of the inventors, a polymer which solves the drawbacks of the conventional low-profile additives discussed above, in other words, a block copolymer which compensates for shrinkage in a radical polymerizable unsaturated resin compound, and furthermore improves the uniform dispersion of polystyrene and styrene-butadiene block copolymers, which have limited compatibility with unsaturated resins, was discovered, and this invention thus realized.

This invention is a radical polymerizable unsaturated resin compound, which is characterized by the contents: (A) one or more radical polymerizable unsaturated resins, (B) one or more polymerizable unsaturated monomers, and (C) one or more block copolymers having at least one condensation polymer and at least one vinyl polymer. The block copolymer is, for example, a radical polymerizable unsaturated resin compound which is obtained by polymerizing a vinyl monomer using a condensation polymer radical polymerization initiator containing an azo functional group. This condensation polymer radical polymerization initiator containing an azo functional group is a radical polymerizable unsaturated resin compound obtained by reacting a condensation polymer containing a functional group and a radical polymerization initiator containing an azo functional group and another functional group. The condensation polymer containing a functional group is a radical polymerizable unsaturated resin compound which is at least one kind of polymer chosen from the following group: saturated polyester, polyether, polycarbonate, and polyurethane. In particular, the compounding ratio is a radical polymerizable unsaturated resin compound containing (A) 20-55 percent by weight of radical polymerizable unsaturated resin, (B) 30-60 percent by weight of polymerizable unsaturated monomer, and (C) 2-25 percent by weight of block copolymer having one or more condensation polymers and one or more vinyl copolymers as block polymer elements. Furthermore, a radical polymerizable unsaturated resin compound for use in molded material is provided which contains at least one of the following: (D) polystyrene, styrene-conjugate diene block copolymer, and styrene-hydrogenated-conjugate diene block copolymer.

Furthermore, a manufacturing method for a block copolymer for use as a low-profile additive for radical polymerizable unsaturated resin compounds is provided which is characterized in that polyurethane having an NCO functional group and a radical polymerization initiator containing an azo functional group and active hydrogen, such as active hydroxyl and amine groups are reacted in a small fraction of solvent, in particular in a solvent of less than 10 percent by weight with respect to the polyurethane containing an NCO functional group, a polymer radical polymerization initiator is thus synthesized, next the polymer radical polymerization initiator is dissolved in a vinyl monomer, and the vinyl monomer is polymerized.

Detailed Description of the Preferred Embodiments

Next, the present invention will be explained in detail.

As the radical polymerizable unsaturated resin (A) of the present invention, unsaturated polyester and vinyl ester resin are provided as polymer elements. The vinyl ester resin is obtained by reacting an epoxy resin with acrylic acid or methacrylic acid; a resin type such as bisphenol A, novolak, glycidyl ester, glycidyl amine, resorcin or the like is used as the epoxy resin.

Furthermore, a polyester obtained from dihydric or greater carboxylic acid or its anhydride and dihydric or greater alcohol is used for the unsaturated polyester; it has a partial ethylene unsaturated functional group. Unsaturated dibasic acids of maleic acid, maleic anhydride, fumaric acid, and the like, and aromatic compounds or saturated dibasic acids of phthalic acid, phthalic anhydride, isophalic acid, tetrahydrophthalic anhydride, succinic acid, adipic acid, and the like, are examples of carboxylic acids. Ethylene glycol, diethylene glycol, dipropylene glycol, 1,3- or 1,4-butylene glycol, neopenthyl glycol, hydrogenated bisphenol A, glycerol, or the like can be used as the alcohol.

The preferred molecular weight average of the unsaturated polyester is 2000-5000; furthermore, the lower limit of the molecular weight of one double-bond subunit of propyleneglycol fumarate is 156, and the lower this number, the better the surface smoothness. The amount used is 20-55 percent by weight; the preferable range is 30-45 percent by weight. At less than 20 percent by weight, the physical strength is inferior, while at more than 55 percent by weight, the viscosity of the compound is high, and the impregnatability of the glass fibers when SMC and BMC are manufactured is inferior.

Aromatic vinyls like styrene, α-styrene, vinyl toluene, and chlorostyrene, and methacrylic acid esters like methyl methacrylate, ethyl methacrylate, and butyl methacrylate are used as polymerizable unsaturated monomers (B). Styrene is preferably used.

The amount of polymerizable unsaturated monomer (B) used is 30-60 percent by weight of the compound; the preferable range is 40-55 percent by weight. At less than 30 percent by weight, the viscosity of the compound is extremely high, and the impregnatability of the glass fibers is poor. Furthermore, at more than 60 percent by weight, the shrinkage of the molded product is great, and the surface smoothness is inferior.

The block copolymer (C) used in the present invention is obtained by a process which synthesizes a condensation polymer radical polymerization initiator containing an azo functional group and a process, using the previous initiator, which polymerizes a vinyl monomer. This condensation polymer radical polymerization initiator containing an azo functional group is obtained by reacting a condensation polymer containing a functional group with a radical polymerization initiator containing an azo functional group and another functional group. Azo compounds containing active hydrogen and azo compounds containing a COOH functional group are examples of this radical polymerization initiator containing an azo functional group and another functional group.

The condensation polymer containing a functional group is at least one polymer selected from the following: polybutadiene, silicone, saturated polyester, polyether, polycarbonate, and polyurethane, preferably saturated polyester, polyether, polycarbonate, or polyurethane; they are mainly polymers of aliphatic raw materials.

The condensation polymer radical polymerization initiator containing an azo functional group is prepared according to the following methods.

(1) The reaction of the condensation polymer containing a functional group and the radical polymerization initiator containing an azo functional group and another functional group is carried out by means of the reaction of a polyurethane containing an NCO functional group and a radical polymerization initiator containing an azo functional group and an active hydrogen; this reaction is carried out in the presence of a small amount of solvent. It is a method in which either

(a) at least one polyurethane in the form of a polymer containing an OH functional group is selected from among the following: saturated polyester, polyether, polycarbonate, and the like, and is reacted, in independent or mixed form, with a polyisocyanate compound, this reaction produces a chain-extended polyurethane, the end OH functional base of which is bonded to an azo compound containing an OH functional group by means of polyisocyanate, or

(b) a radical polymerization initiator containing a polyurethane azo functional group is used in the reaction of the end NCO functional group of a polyurethane and an azo compound containing an OH functional group.

(2) This is a method in which an azo compound radical polymerization initiator is used which is the result of a bond between at least one of the following: polyurethane having an OH functional group, polyester having an OH functional group, polyether having an OH functional group, and polycarbonate having an OH functional group, and a radical polymerization initiator having an azo functional group and a COOH functional group which is acid chloridated by means of thionyl chloride, whose bond is caused by the reaction of a condensation polymer containing a functional group and a radical polymerization initiator having an azo functional group and another functional group. This reaction takes place in the presence of a solvent.

Method (1) appears in J. Applied polymer. Sci., 31 2171(1986); azobiscyanopentanol, azobiscyanopropanol, and azobis[2-methyl-N-(2-hydroxyethyl)]propionamide can be used as the radical polymerization initiator having an azo functional group and an OH functional group. Furthermore, diphenylmethanediisocyanate, tolueneisocyanate, xylylenediisocyanate, hexamethylenediisocyanate, isophorodiisocyanate, hydrogenated diphenylmethanediisocyanate, and hydrogenated toluenediisocyanate can be used as the polyisocyanate compound.

Method (2) appears in J. Applied polymer. Sci., 24 405(1986); by reacting azobiscyanopentanoic chloride, obtained by reacting azobiscyanopentanoic acid with thionyl chloride, with the end OH functional group of a condensation polymer, a condensation polymer radical polymerization initiator having an azo functional group is obtained.

However, since according to the methods of these documents a condensation polymer radical polymerization initiator having an azo functional group is synthesized in a large amount of solvent, a sediment is precipitated, and vacuum drying is carried out at low temperatures so that the condensation polymer radical polymerization initiator having an azo functional group will not be reduced, the methods are industrially complex.

In the method (1) of the present invention, these drawbacks are overcome by means of carrying out the reaction in the presence of a small amount of solvent, in particular carrying out the reaction in the presence of an amount of solvent which is less than 10 percent by weight with respect to the pclyurethane containing an NCO functional group and thus synthesizing the polyurethane radical polymerization initiator having an azo functional group, next dissolving the condensation polymer radical polymerization initiator having an azo functional group in a vinyl monomer, and causing the vinyl monomer to polymerize which creates a block copolymer. As the solvent dissolves the radical polymerization initiator having an azo functional group, it is preferable to use, for example, N-methylpyrrolidone, acetone, dimethylformamide, or the like for this. By means of this, a small amount of the solvent is lost, but the condensation polymer radical polymerization initiator having an azo functional group can be obtained with a short reaction time. Since it is necessary to control the reduction of the azo functional group in the urethanizing reaction, it is preferable to carry out this reaction in a temperature range from $10^{\circ}$ C to a temperature which is $10^{\circ}$ C lower than the temperature at which the azo compound has a half life of 10 hours, using for example a closed pressurizing kneader or a reaction vessel suitable for high viscosity compounds, where the percentage of NCO in the reaction is less than 0.01%.

4

The amount of radical polymerization initiator having an azo functional group in the condensation polymer radical polymerization initiator having an azo functional group is 1-10 percent by weight, preferably 2-5 percent by weight. If less than 1 percent by weight, the polymerization of the polymerizable unsaturated monomer cannot be completed, and if greater than 10 percent by weight, the molecular weight of the polyurethane portion of the block copolymer will be small.

Four types of substances can be used as the polymer containing an OH functional group:

(a) saturated polyesters resulting from the bonding of glycols such as ethylene glycol, propylene glycol, butylene glycol, hexamethylene glycol, and the like, with dibasic acids such as adipic acid, succinic acid, azelaic acid, sebacic acid, phthalic acid, and the like;

(b) types of polyethers such as saturated polyesters resulting from the ring-opening polymerization of caprolactone, butyrolactone, and so on, polyethylenoxide, polypropylenoxide, and the like,

(c) polycarbonates resulting from the reaction of the glycols mentioned above with dimethylcarbonate or diethylcarbonate, or, finally,

(d) polyurethanes resulting from the chain extension of one or a mixture of two or more of the above saturated polyesters, polyethers, and polycarbonates by means of the polyisocyanate mentioned above.

Vinyl monomers such as aromatic compounds like styrene, α-methylstyrene, and vinyl toluene, (meta)-acrylic acid esters like methyl(meta)acrylate, ethyl(meta)acrylate, and butyl(meta)acrylate, and vinyl esters like vinyl acetate, vinyl propionate, and vinyl benzoate are polymerized according to solution polymerization methods, suspension polymerization methods, emulsion polymerization methods, bulk polymerization methods, or like methods. In particular, in the case of polyurethane, it is preferable to proceed according to the bulk polymerization method. Furthermore, by means of the joint use with the vinyl monomer mentioned above of a vinyl monomer containing an acetic acid functional group such as acrylic acid, methacrylic acid, itaconic acid, or the like, and by means of the joint use of alkaline earth metals such as magnesium oxide, magnesium hydroxide, or the like, a polymer with superior viscosity-increasing capacities is produced.

The block copolymer is comprised of condensation polymers and vinyl polymers as block polymer elements; the composition ratio (weight ratio) thereof being preferably 0.1/0.9 - 0.9/0.1, with the 0.3/0.7 - 0.7/0.3 range especially preferable.

The amount of the block copolymer used in the radical polymerizable unsaturated resin compound of the present invention is as follows: when low-profile additives such as the polystyrene discussed hereinafter and the like are not used jointly, the amount is 2-25 percent by weight, with 10- 20 percent by weight preferable, while when there is joint use, the amount used is 2-20 percent by weight, with 5-15 percent by weight preferable. If less than 2 percent by weight is used, the shrinkage compensation of the radical polymer curing low-profile additives is not remarkable, and if more than 25 percent by weight is used, the physical properties of the molded product are not good. When polystyrene is used jointly, and less than 2 percent by weight is used, the favorable dispersion effects of the polystyrene and styrene-conjugate diene block copolymers are not remarkable, and in addition, when more than 20 percent by weight is used, the physical properties of the molded product become bad.

In the present invention, it is possible to use other radical polymer curing low-profile additives. Polymers which are created by means of the polymerization of the polystyrene used herein according to the emulsion polymerization method, the suspension polymerization method, the solution polymerization method, or the bulk polymerization method and have a polymerization degree of 500-6000, and preferably a polymerization degree of 2000-4000, can be suitably used, and copolymers of α-methylstyrene, methacrylic acid methyl can also be used.

Furthermore, the styrene-conjugate diene block copolymer is a block copolymer made up of styrene, styrene components obtained by the polymerization of conjugate diene within an organic solution, and conjugate diene components by means of an organic metal catalyst; butadiene, isoprene, 1,3-pentadiene, and the like can be used as the conjugate diene. Furthermore, in the present preferred embodiment, styrene-hydrogenated conjugate diene block copolymer, which is obtained by attaching hydrogen to styrene-conjugate diene block copolymer, can also be used. In addition, the composition units of the block copolymer include repeating units of styrene and conjugate diene such as styrene-conjugate diene, styrene-conjugate diene-styrene, conjugate diene-styrene-conjugate diene and the like. The amount of these copolymers used is 3-20 percent by weight of the compound, preferably 5-15 percent by weight. If less than 3 percent by weight is used, the low-shrinkage effects are not remarkable, and if more than 20 percent by weight is used, the physical strength of the molded product is inferior.

Aside from curing catalysts, curing promotion agents, polymerization inhibiting agents, filling agents, reinforcing material, thickening agents, internal mold release agents, pigment, and the like may be added to the compound of the present invention depending on the purpose of use.

Examples of the curing catalyst are organic peroxides such as benzoyl peroxide, t-butylperbenzoate, t-butylperoctoate, dicumylperoxide, di-t-butylperoxide, trimethylcycronexanoneperketal, and the like.

Examples of the polymerization inhibiting agent are hydroquinone, parabenzoquinone, catechol, toluhydroquine, and the like; examples which can be used as the curing promotion agent are cobalt naphthanate, cobalt octenate, cobalt acetylacetate, dimethyl aniline, and the like.

Examples of the filling agent are calcium carbonate, clay, hydrated alumina, quartz granules, glass flakes, glass bubbles, mica powder, and the like; examples of the strengthening material are roving or chopped strands obtained from this, mat-form glass fibers, carbon fibers, metal fibers, organic fibers, or the like. In particular, the amount of reinforcement used is appropriately 20-35 percent by weight of the compound containing the reinforcement.

Examples of the internal mold release agent are aliphatic metal salts such as zinc stearate and the like, and waxes such as polyalkylene ether and the like. Furthermore, examples of the viscosity-increasing agent are earth metals such as magnesium oxide, magnesium hydroxide, calcium hydroxide, and the like, and isocyanate compounds.

The radical polymerizable unsaturated resin compound of the present invention can be used to advantage in SMC and BMC using unsaturated polyester resin and can provide a molded product with superior surface smoothness, paintability, physical strength, and pigmentability. Furthermore, this molded product can be used for external parts of an automobile such as the hood, roof, doors, tail, and gate, for large molded products such as bathtubs, waterproof boards, purifying layers, tanks, cooling towers, kitchen counters, washbowls, for household products such as chairs and tables, for the casing and housing of electronic goods, and the like.

Since it is possible according to the present invention to provide a radical polymerizable unsaturated resin compound which contains, as low-profile additives, one or more block polymers, which have as block polymer elements vinyl polymers and condensation polymers which chain-extend unsaturated polyesters, polyethers, polycarbonates, and/or mixtures thereof by means of isocyanate compounds, molded substances using the radical polymerizable unsaturated resin compound have a low shrinkage ratio when the polymer is cured; accordingly, a molded product can be provided which not only has good dimensional stability, but also good compatibility of each element and superior homogeneity and surface smoothness.

Furthermore, when polystyrene or styrene-conjugate block polymers are used jointly with the block copolymer of the present invention, the dispersion characteristics of these resins with respect to the polymerizable unsaturated resin is improved, and the curing shrinkage characteristics of the radical polymerizable unsaturated resin compound when molded can be controlled effectively.

When the compound of the present invention is used in this way, the low-shrinkage characteristics and homogeneity are improved, and in addition, the characteristics of physical strength, pigmentability, resistance to boiling water and the like can also be improved.

Examples

Next, the examples of the present invention will be explained.

Example 1: Synthesis of polycaprolactone polyurethane-polystyrene block copolymer

150 g of polycaprolactone (OH functional group equivalent: 56 mg KOH/g) was placed in a four neck distillation 1 liter flask and heated to 100°. 15 mg of stannous octoate and 17.4 g of toluenediisocyanate was added, and when this was reacted for 1 hour under a blanket of nitrogen gas, the viscosity increased. At this time 150 g of dimethylformamide was added. After reacting again for one hour, this was cooled to 50°, 300 g of dimethylformamide and 5 g of 2,2′azobis 2-methyl-N(2-hydroxyethyl) propionamide was added, and this was allowed to react for 8 hours. Next, 225 g of styrene was added, this was heated to 100°C, and polymerized for 10 hours; after this, it was caused to precipitate in a large amount of methanol. The precipitate was dried for 24 hours at 60°C and 365 g of a white polymer was thus obtained. The number average molecular weight of this polymer was 29,000, and the weight average molecular weight was 63,000; an elementary analysis for C, H, and O revealed that C: 79.4%, H: 7.4%, and O: 13.2% and the block copolymer consisted of 41% polycaprolactone and 59% polystyrene. Finally, the block polymerization ratio was measured according to the formula (I) below and this block polymerization ratio was found to be 95%. This was termed block copolymer A.

Example 2: Synthesis of polyesterpolyurethane-polystyrene block copolymer

500 g of methylethylketone was placed in a 2 liter four neck distillation flask, 50 mg of stannous octoate, 19.6 g of 2,2'-azobis(2-cyanopropanol), and 36.5 g of tolylenediisocyanate was added, and this was reacted for 4 hours at 40°C. Next, 600 g of a polyester consisting of 1,4- butanediol (OH functional group equivalent: 18.7 mg KOH/g) and adipic acid was added, this was reacted for 8 hours, distilled under vacuum, the methylethylketone was removed, and the contents vacuum-dried.

1200 grams of ion-exchanged water and 12 g of a 10% aqueous solution of polyacrylic acid polymer were placed in a 2 liter four neck distillation flask; 120 g of the material which was dried above under low pressure dissolved in 180 g of styrene, 2 g of methacrylic acid, and 0.5 g of dodecylmercaptane were added. While being stirred under a blanket of nitrogen gas, this was polymerized for 4 hours at 70°C and for 4 hours at 80°C, the suspension polymer thus obtained was rinsed in water and dried for 16 hours at 80°C; 290 g of polymer were thus obtained. The number average molecular weight of this polymer was 78,000; it was a block copolymer consisting of 41% polyester and 59% polystyrene, and its block polymerization ratio was 93%. This was termed block copolymer B.

Example 3: Synthesis of a polyethylpolyurethane-polyvinyl acetate block copolymer

150 g of polypropylene glycol (OH functional group equivalent: 112 mg KOH/g) was placed in a 1 liter four neck distillation flask, this was heated to 80°C, 15 mg of dibutyl tin laurate and 27.8 g of isophoronediisocyanate were added, and this was reacted under a blanket of nitrogen gas. After one hour, 200 g of chloroform was added, and this was cooled to 5°C. Next, 10 g of triethanolamine was added, then a solution of 8.0 g of 4,4'-azobis(4-cyanovalericchloride) dissolved in 100 g of chloroform was added drop by drop, this was reacted at 5°C for 4 hours, then this reaction solution was rinsed 5 times and vacuum-dried.

150 g of the dried material were dissolved in 300 g of toluene, 1 g of crotonic acid and 150 g of vinyl acetate were added, and this was reacted for 12 hours at 70°C while being stirred under a blanket of nitrogen gas. The reaction fluid was precipitated in a large amount of hexane, and the precipitate was vacuum-dried at 50°C. The block copolymer thus obtained had a number average molecular weight of 48,000 and a weight average molecular weight of 185,000; a block copolymer consisting of 52% polypropylene glycol and 48% vinyl acetate was obtained. This was termed block copolymer C.

Example 4: Synthesis of a polycarbonatepolyurethane-polymethylmethacrylate block copolymer

200 g of polycarbonate (OH functional group equivalent: 56 mg KOH/g) obtained from 1,6-hexanediol and diethylcarbonate was placed in a 2-liter four neck distillation flask, this was heated to 80°C, 20 mg of stannous octoate and 23.9 g of hexamethylenediisocyanate were added, this was reacted for 2 hours, and then dissolved in 200 g of methylethylketone. The temperature was lowered to 40°C, 6.6 g of 2,2'-azobis(2-cyanopropanol) and 100 g of methylethylketone were added, and this was reacted for 8 hours.

The reaction liquid was vacuum-dried, 200 g of the dried material were added to 5 g of methacrylic acid, this was added to 2 g of dodecylmercaptane, and this was dissolved in 470 g of methylmethacrylate; this was placed in a 3 liter four neck distillation flask into which 18 g of an aqueous solution of 10% acrylic acid copolymer had been placed, and this was polymerized for 8 hours at 75°C while being stirred under a blanket of nitrogen gas. The compound was dried for 18 hours at 70°C, and 650 g of white granular material was obtained. This had a number average molecular weight of 36,000 and a weight average molecular weight of 92,000, and was a block copolymer consisting of 31% urethane-modified polycarbonate and 69% polymethylmethacrylate. This was termed block copolymer D.

Example 5: Synthesis of a polyesterpolyurethane-polystyrene block copolymer

20.7 g of 2,2'-azobis[2-methyl-N-(2-hydroxyethyl)propionamide], 864 g of saturated polyester polyol (molecular weight: 2000) consisting of butylene glycol and adipic acid, 117 g of diphenylmethanediisocyanate, 71 mg of stannous octoate, and 52.7 g of dimethylformamide were placed in a 3 liter closed pressurizing kneader and reacted for 2 hours at 60°C while being stirred; at this point, the amount of isocyanate contained was less than 0.5%. After the completion of the reaction, 30 g of n-butanol were added and this stirred, and after the unreacted isocyanate had been reacted, 1000 g of styrene were added and dissolved evenly to obtain a polymeric azo initiator styrene solution. This was diluted with styrene so that the solution contained 15% non-volatiles, transferred to a 5-liter separable flask, polymerized at 90°C for 5 hours until the non-volatiles reached 30%, and thus a polyester polyurethane-polystyrene block copolymer was obtained. Finally, the block polymerization ratio was measured as in Example 1 and found to be 92%. This was termed block copolymer E.

Example 6

20.7 g of 2,2'-azobis[2-methyl-N-(2-hydroxyethyl)propionamide], 864 g of polycaprolactone (OH functional group equivalent: 56 mg KOH/g), 117 g of diphenylmethanediisocyanate, 71 mg of stannous octoate, and 52.7 g of dimethylformamide were placed in a 3 liter closed pressurizing kneader, reacted for 2 hours at 60°C while being stirred; at this point, the amount of isocyanate contained was less than 0.5%. After the completion of the reaction, 30 g of n-butanol were added and this stirred, and after the unreacted isocyanate had been reacted, 1000 g of styrene were added and dissolved evenly to obtain a polymeric azo initiator styrene solution. This was diluted with styrene to a 15% non-volatile content, transferred to a 5-liter separable flask, polymerized at 90°C for 5 hours until the unvaporized portion became 30%, and thus a polyurethanepolycaprolactone-polystyrene block copolymer was obtained. Finally, the block polymerization ratio was measured according to the formula (I) and found to be 90%. This was termed block copolymer F.

Example 7

20.7 g of 2,2'-azobis[2-methyl-N-(2-hydroxyethyl)propionamide], 864 g of saturated polyester polyol (molecular weight: 2000) consisting of butylene glycol and adipic acid, 117 g of diphenylmethanediisocyanate, 71 mg of stannous octoate, and 52.7 g of dimethylformamide were placed in a 3 liter closed pressurizing kneader and reacted for 2 hours at 60°C while being stirred; at this point, the amount of isocyanate contained was less than 0.5%. After the completion of the reaction, 30 g of n-butanol was added and this stirred, and after the unreacted isocyanate had been reacted, 1500 g of styrene was added and dissolved evenly to obtain a polymeric azo initiator styrene solution. This was diluted with styrene up to 9% non-volatiles, transferred to a 5-liter separable flask, polymerized at 90°C for 5 hours until the non-volatiles reached 30%, and thus a polyurethane-polystyrene block copolymer was obtained. Finally, the block polymerization ratio was measured as in Example 1 and found to be 91%. This was termed block copolymer G.

(Block Polymerization Ratio Measurement Method)

The block copolymer of Example 6 will be explained as an example.

20 g of block copolymer containing polystyrene, polyurethane, and styrene-urethane block copolymer are dissolved in 80 cc of tetrahydrofuran, the solution is precipitated in a mixture of 600 cc of methanol and 300 cc of acetone, and this is filtered. The filtered liquid is dried and hardened by evaporation, this is weighed, and becomes A. Furthermore, the material remaining in the filter is dried, dissolved again in 80 cc of tetrahydrofuran, precipitated in a mixture of 800 cc of acetone and 100 cc of methanol, and filtered. The filtered liquid is dried and hardened by evaporation, this is weighed, and becomes B. In addition, the material remaining in the filter is dried, weighed, and becomes C. The block polymerization ratio is obtained according to the formula (I) below. It is made certain by means of infrared absorption spectra that A is polyurethane consisting of butylene glycol and adipic acid, B is styrene-urethane block copolymer, and that C is polystyrene.

## EP 0 418 913 A2

## Formula (I)

$$\text{block polymerization ratio (\%)} = \frac{B}{A + B + C} \times 100$$

(Manufacturing Method of Radical Polymerizable Unsaturated Resin Compounds)

Examples 8 - 14

The four block polymers obtained in Examples 1-4 above are dissolved in styrene so as to have a 30% solid component, and a low-profile additive solution is obtained. Furthermore, the low-profile additive solution of Examples 5-7 was used without change.

50 parts unsaturated polyester comprising 30% styrene and 70% unsaturated polyester comprising one mole of propylene glycol and one mole of fumaric acid, 50 parts of the various low-profile additive solutions described above, one part t-butylperbenzoate, 4 parts zinc stearate, 180 parts calcium carbonate, and one part polytone black PT5152 (manufactured by Dainippon Ink & Chemicals, Inc.) are mixed, and then one percent by weight of magnesium oxide is added, this is mixed well, matured for 24 hours at 35°C, which thickened the compound.

The radical polymerizable unsaturated resin compounds of Examples 8-14 which contain the low-profile additive solutions of the above 7 types were thus obtained, 65 g of each compound was placed in the die stipulated in JIS K-6911, cured for 5 minutes at 140°C, a disk-shaped molded product was obtained, and the shrinkage ratio and degree of blackness (pigmentability) were measured; the results are shown in Table 1.

Furthermore, the radical polymerizable unsaturated resin compounds of Examples 7-14 above were supplied to a SMC fabricating machine, glass fibers were chopped to a length of one inch and continuously dropped onto the compound until the glass content reached 30%, and SMC was thereby manufactured. After this SMC was matured for 24 hours at 35°C, it was placed in a 300 mm x 500 mm die, molded under 100 kg/cm² of pressure at 140°C, which resulted in 3 mm thick moldings. These were tested for compatibility, mold shrinkage ratio, surface smoothness, flexural strength, resistance to boiling water, and falling-ball impact toughness, and the results are shown in Table 1.

Comparative Example 1

In place of the 2,2'-azobis(2-methyl-N-2-hydroxyethylpropionamide] of Example 5, the same process was followed using azobisisobutylnitrile; the block polymerization ratio was measured as in Example 5 and was 2.5%, so that this was a blended substance of polyurethane and polystyrene.

Comparative Examples 2-5

Polystyrene with a number average molecular weight of 260,000, polymethylmethacrylate with a number average molecular weight of 50,000, and polyvinyl acetate with a number average molecular weight of 34,000 were dissolved in styrene so that the solid percentage was 30% by weight, and low-profile additive solutions were thus obtained. In addition, the polymer solution of comparative example 1 was used without change. These solutions were used in the same way as in the examples 7-14 to form molded products; the shrinkage ratio and the degree of blackness were measured and the results are shown in Table 1.

Furthermore, glass fibers were mixed in in the same way as in the above examples 7-14 to make disks, the same measurements as above were made, and the results are shown in Table 1.

9

## TABLE 1

| Low-Profile Additive Used in Radical Polymerizable Unsaturated Resin Compound | EXAMPLES | | | | |
|---|---|---|---|---|---|
| | 8 | 9 | 10 | 11 | 12 |
| | Block Polymer | Block Polymer | Block Polymer | Block Polymer | Block Polymer |
| | A | B | C | D | E |
| Disk Molded Linear Product Shrinkage Ratio, (%) | 0.16 | 0.16 | 0.13 | 0.20 | 0.16 |
| Disk Molded Product Degree of Blackness | 23 | 22 | 30 | 28 | 22 |
| Compatibility | ○ | ○ | ◎ | ◎ | ○ |
| SMC MOLDED PRODUCT Mold Shrinkage Ratio, (%) | -0.127 | -0.113 | -0.107 | -0.135 | -0.120 |
| Surface Smoothness — Longwave | 2.3 | 2.4 | 2.1 | 2.0 | 2.1 |
| Surface Smoothness — Shortwave | 280 | 275 | 250 | 220 | 210 |
| Flexural Strength kg / mm$^2$ | 19.7 | 20.2 | 19.2 | 19.9 | 19.8 |
| Flexural Modulus kg / mm$^2$ | 1100 | 1100 | 980 | 1030 | 1050 |
| Resistance to Boiling Water | ○ | ○ | △ | ○ | ○ |
| Falling Ball Impact | ○ | ○ | ○ | ○ | ○ |

(continued)

## TABLE 1 (continued)

| Low-Profile Additive Used in Radical Polymerizable Unsaturated Resin Compound | EXAMPLES | | COMPARATIVE EXAMPLES | | | |
|---|---|---|---|---|---|---|
| | 13 | 14 | 2 | 3 | 4 | 5 |
| | Block Polymer | Block Polymer | Poly-styrene | Polymethyl Methacrylate | Polyvinyl Acetate | Polymer of Comp. Ex. 5 |
| | F | G | | | | |
| Disk Molded Linear Product Shrinkage Ratio, (%) | 0.16 | 0.18 | 0.38 | 0.33 | 0.20 | 0.30 |
| Disk Molded Product Degree of Blackness | 24 | 20 | 21 | 33 | 43 | 28 |
| Compatibility | ○ | △ | ✕ | △ | ◎ | ✕ |
| SMC MOLDED PRODUCT Mold Shrinkage Ratio, (%) | -0.118 | -0.118 | 0.09 | 0.01 | -0.076 | -0.098 |
| Surface Smooth-ness Longwave | 2.2 | 2.3 | 7.8 | 4.7 | 2.3 | 4.8 |
| Surface Smooth-ness Shortwave | 220 | 240 | 420 | 390 | 276 | 380 |
| Flexural Strength kg / mm$^2$ | 20.2 | 19.5 | 19.5 | 19.6 | 19.2 | 19.3 |
| Flexural Modulus kg / mm$^2$ | 1150 | 1040 | 1100 | 1030 | 950 | 1010 |
| Resistance to Boiling Water | ○ | ○ | ○ | △ | ✕ | △ |
| Falling Ball Impact | ○ | ○ | △ | △ | ✕ | △ |

The details of the various measurements in Table 1 are as follows.

Shrinkage ratio: Average value of 3 molded products (one product was measured in four places).

Degree of blackness: Average value of 3 molded products (a value of 0 indicates pure black, a value of 100 indicates pure white).

Compatibility: 50 parts unsaturated polyester resin and 50 parts low-profile additive solution were mixed, left standing overnight, and observed.

○ : No separation

O : Slight separation

△ : Partial separation

X : Total separation

Mold shrinkage ratio: An average value (percent) of four measured places is shown. A minus indicates expansion.

Surface smoothness: A 25cm section was measured at four points by means of a surface measurement apparatus made by Tokyo Boeki Co., and longwaves and shortwaves were measured using a company method. The longwave value indicates waviness; the lower the value, the lower the waviness level. Furthermore, the shortwave value indicates surface roughness; the lower the value, the less surface roughness.

Flexual strength: Based on JIS K-6911.

Resistance to boiling water: A test sample (8cm x 15cm) was immersed in 98°C water for 1 hour, and expansion and whitening of the surface were observed.

O : Almost no change.

Δ : Some expansion or whitening.

X : Remarkable expansion or whitening.

Falling-ball impact: A 500 g steel ball was dropped onto a test sample (15cm x 15cm) from a height of 50 cm. A] penetrant dye was then spread on the reverse side, and the state of cracking observed.

O : Almost no cracking.

Δ : Some cracking.

X : Entire surface cracked.

As shown in Table 1, the molded products using the radical polymer curing low-profile additives exhibited low shrinkage, and the degree of blackness was also low. This low degree of blackness indicates that the pigmentability is favorable and will allow other colors to be used.

Examples 15-18

(Synthesis of Radical Polymerizable Unsaturated Resin Compounds Using Low-profile Additives Jointly)

60 parts unsaturated polyester comprising 35% styrene and 65% unsaturated polyester (A) comprising one mole of propylene glycol, 2 moles of necpenthyl glycol, 1 mole of terephthalic acid, and one mole of fumaric acid, 20 parts of a 50% styrene solution of polystyrene with a polymerization degree of 2500, 20 parts of a solution of the block polymers A, B, E, and F obtained in examples 1, 2, 5, and 6 dissolved in styrene so that the solid portion is 30%, one part t-butylperbenzoate, 4 parts zinc stearate, 180 parts calcium carbonate, and one part polytone black PT5152 (manufactured by Dainippon Ink & Chemicals, Inc.) are mixed, and then one part magnesium oxide is added, this is mixed well, and matured overnight, which thickened the compound.

65 g of each compound was placed in the die stipulated in JIS K-6911, cured for 5 minutes at 140°C, a disk molded product was obtained, and the shrinkage ratio was measured as in the case of Table 1; the results are shown in Table 2.

Comparative Example 6

In place of the block polymer A of example 1, 60 parts unsaturated polyester resin, 32 parts of a 50% solution of polystyrene with a polymerization degree of 2500, and 8 parts styrene were used, and the above process otherwise followed, to make a molded product, the shrinkage ratio of which was measured. The results are shown in Table 2.

## TABLE 2

| Examples | | 15 | 16 | 17 | 18 | Comp. Ex. 6 |
|---|---|---|---|---|---|---|
| Unsaturated Polyester (A) | | 39 | 39 | 39 | 39 | 39 |
| Low-Profile Additive | Block Polymer A | 6 | | | | |
| | Block Polymer B | | 6 | | | |
| | Block Polymer E | | | 6 | | |
| | Block Polymer F | | | | 6 | |
| | Polystyrene | 10 | 10 | 10 | 10 | 16 |
| Styrene | | 45 | 45 | 45 | 45 | 45 |
| Mold Shrinkage Ratio, (%) | | 0.06 | 0.06 | 0.07 | 0.06 | 0.30 |
| Degree of Blackness | | 18 | 16 | 16 | 16 | 16 |
| Compatibility | | △ | ○ | ○ | ○ | ✕ |

Examples 19-22

50 parts unsaturated polyester comprising 30% styrene and 70% unsaturated polyester (A) comprising one mole of propylene glycol and one mole of fumaric acid, 30 parts of a 30% styrene solution of styrene-butadiene block polymer (Kraton D1300X, made by Shell Chemical Company), 20 parts of a solution of the block polymers obtained in examples 1, 2, 5, and 6 dissolved in styrene so that the solid portion is 30%, one part t-butylperbenzoate, 4 parts zinc stearate, and 150 parts calcium carbonate were mixed, then one part magnesium oxide was added, these compounds were supplied to a SMC fabricating machine, glass fibers chopped to the length of one inch were added to the compound until the glass content reached 30%, and SMC was thereby manufactured. After this SMC was matured for 24 hours at 35°C, it was placed in a 300 mm x 500 mm die, molded under 100 kg/cm² of pressure at 140°C, which resulted in 3 mm thick moldings. The results of measurements of the same type as those in Table 1 are shown in Table 3.

Comparative Example 7

In place of the block polymer A of example 1, 60 parts unsaturated polyester resin, 50 parts of a 30% styrene solution of styrene-butadiene block polymer was used, and the process of examples 16-23 otherwise followed, to make a sheet. The results of the measurements are shown in Table 3.

## TABLE 3

| Examples | | 19 | 20 | 21 | 22 | Comp. Ex. 7 |
|---|---|---|---|---|---|---|
| Unsaturated Polyester (B) | | 35 | 35 | 35 | 35 | 35 |
| Low-Profile Additive | Kraton D1300X | 9 | 9 | 9 | 9 | 15 |
| | Block Polymer A | 6 | | | | |
| | Block Polymer B | | 6 | | | |
| | Block Polymer E | | | 6 | | |
| | Block Polymer F | | | | 6 | |
| Styrene | | 50 | 50 | 50 | 50 | 50 |
| Compatibility | | ○ | ○ | ◉ | ◉ | ✕ |
| Mold Shrinkage Ratio, (%) | | -0.185 | -0.161 | -0.145 | -0.130 | -0.062 |
| Surface Smooth-ness Test | Longwave | 1.89 | 1.95 | 1.80 | 1.75 | 2.75 |
| | Shortwave | 205 | 225 | 185 | 190 | 381 |

Example 23

Vinylester resin, made by reacting a bisphenol A epoxy resin (molecular weight: 800) with methacrylic acid was diluted with styrene up to 60% nonvolatiles, and 50 parts of this solution, 50 parts of a low-profile additive solution using the substance obtained in example 1, one part t- butylperbenzoate, 4 parts zinc stearate, and 250 parts calcium carbonate were mixed in a kneader, and 63 parts of 0,5 inch chopped glass were added. A disk was molded from the BMC obtained in the same way as in example 5, and this was evaluated. The mold shrinkage ratio was -0.01%, the longwaviness was 3.2, and the shortwaviness was 310.

Comparative Example 8

14

In place of the low-profile additive of example 1 used in example 23, the polystyrene used in comparative example 2 was used, and the above process was otherwise followed, to produce BMC; this was molded into a disk and evaluated as above. As a result, the mold shrinkage ratio was found to be 0.12%, the longwaviness was found to be 9.7, and the shortwaviness was found to be 630.

Example 24

Vinylester resin made by reacting a bisphenol A epoxy resin (molecular weight: 800) with methacrylic acid was diluted with styrene up to 60% non-volatiles, and 50 parts of this solution, 30 parts of a styrene solution of the styrene-butadiene block polymer used in example 15, 20 parts of a styrene solution of the urethane-modified polycaprolactone-polystyrene block polymer used in example 1, one part t-butylperbenzoate, 4 parts zinc stearate, and 250 parts calcium carbonate were mixed in a kneader, and 63 parts of 0,5 inch chopped glass were added. A disk was molded from the BMC obtained in the same way as in example 5, and this was evaluated. The mold shrinkage ratio was -0.095%, the longwaviness was 2.40, and the shortwaviness was 280.

Comparative Example 9

The urethane-modified polycaprolactone-polystyrene block polymer of example 1 used in example 24 was not used, and the amount of the styrene solution of the styrene-butadiene block polymer was changed from 30 parts to 50 parts, and the above process was otherwise followed, to produce BMC; this was molded into a disk and evaluated as above. As a result, the mold shrinkage ratio was found to be -0.040%, the longwaviness was found to be 3.95, and the shortwaviness was found to be 470.

## Claims

1. A radical polymerizable unsaturated resin compound consisting essentially of:
   a) at least one radical polymerizable unsaturated resin;
   b) at least one polymerizable unsaturated monomer; and
   c) at least one block copolymer, wherein said block copolymer consists essentially of at least one condensation polymer and at least one vinyl polymer.

2. A resin compound in accordance with Claim 1, in which said block copolymer is obtained by polymerizing a vinyl monomer using a condensation polymer radical polymerization initiator having an azo functional group.

3. A resin compound in accordance with Claim 2, in which said condensation polymer radical polymerization initiator having an azo functional group is obtained by reacting a condensation polymer having a functional group and a radical polymerization initiator having an azo functional group and another functional group.

4. A resin compound in accordance with claim 3, in which said condensation polymer having a functional group is at least one selected from the group of saturated polyester, polyether, polycarbonate, and polyurethane.

5. A resin compound in accordance with claim 3, in which said radical polymerization initiator having an azo functional group and another functional group is one selected from the group of an azo compound containing active hydrogen and an azo compound containing a COOH functional group.

6. A resin compound in accordance with claim 3, in which said reaction of said condensation polymer having a functional group and said radical polymerization initiator having an azo functional group and another functional group is a reaction of polyurethane having an NCO functional group and a radical polymerization initiator having an azo functional group and containing active hydrogen, and said reaction is carried out in the presence of a solvent.

7. A resin compound in accordance with claim 3, in which said reaction of said condensation polymer having a functional group and said radical polymerization initiator having an azo functional group and another functional group is a reaction of at least one selected from the group of polyurethane having an OH functional group, polyester having an OH functional group, polyether having an OH functional group, and polycarbonate having an OH functional group, and a radical polymerization initiator having an azo functional group and a COOH functional group, and said reaction is carried out in the presence of a solvent.

15

8. A resin compound in accordance with claim 5, in which said radical polymerization initiator having an azo functional group and containing active hydrogen is an azo compound containing an OH functional base.

9. A resin compound in accordance with claims 4, 6, and 7, in which said polyurethane is reacted with at least one of the group of

at least one polyisocyanate compound, and

at least one polymer containing an OH functional group selected from the group of saturated polyester, polyether, and polycarbonate.

10. A resin compound in accordance with claims 1-9, in which a compound ratio is

20-55 parts by weight of a),

30-60 parts by weight of b), and

2-25 parts by weight of c).

11. A resin compound in accordance with claim 1-10, in which at least one selected from the group of polystyrene, styrene-conjugate diene block copolymer, and styrene-hydrogenated conjugate diene block copolymer is added as element d.

12. A resin compound in accordance with claim 11, in which an amount of element d is 3-20 parts by weight.

13. A resin compound in accordance with claims 1-12, in which said radical polymerizable unsaturated resin compound is used for molded material.

14. A manufacturing method for block copolymers used as low-profile additives for radical polymerizable unsaturated resin compounds, which comprises the steps

a) reacting a polyurethane containing an NCO functional group with a radical polymerization initiator having an azo functional group and containing active hydrogen in the presence of a solvent, thus creating a polyurethane radical polymerization initiator, and

b) dissolving said polyurethane radical polymerization initiator in a vinyl monomer and causing said vinyl monomer to undergo a polymerization reaction.

15. A manufacturing method for block copolymers in accordance with claim 14, in which an amount of said solvent is less than 10 percent by weight with respect to said polyurethane containing an NCO functional group.

16. A resin compound in accordance with claim 1, in which a block copolymer obtained according to the manufacturing method of claim 14 is contained.